# EUROPÄISCHE PATENTSCHRIFT

(11) **EP 3 527 433 B1**
(45) Veröffentlichungstag und Bekanntmachung des Hinweises auf die Patenterteilung: **10.03.2021**
(21) Anmeldenummer: 19151574.1
(22) Anmeldetag: 14.01.2019
(51) Int. Cl.: B60R 13/02, B60J 7/20, B62D 25/10, B62D 29/04

(54) **KRAFTFAHRZEUG**
MOTOR VEHICLE
VÉHICULE AUTOMOBILE

(30) Priorität: 14.02.2018 DE 102018202262
(43) Veröffentlichungstag der Anmeldung: 21.08.2019
(73) Patentinhaber: Bayerische Motoren Werke Aktiengesellschaft, 80809 München (DE)
(72) Erfinder: Dalary, Reinhard, 84051 Essenbach (DE); Geissler, Andreas, 81371 Muenchen (DE)

(56) Entgegenhaltungen:
- WO-A1-2010/130906
- FR-A1- 2 719 271

## Beschreibung

Die Erfindung betrifft ein Kraftfahrzeug gemäß dem Oberbegriff des Anspruchs 1.

Die Erfindung betrifft die Befestigung von Zierbauteilen oder Blenden oder dergleichen, die zumindest eine außen sichtbare Außenfläche aufweisen. Wenn eine derartige Blende mit einer nach außen sichtbaren Fläche an einem anderen Karosserie-bauteil verschraubt wird, muss die Verschraubung mit einem definierten Anschraubmoment durchgeführt werden.

Ein definiertes Anschraubmoment stellt sicher, dass sich die Außenfläche der Blende nicht verzieht bzw. dass die Außenfläche der Blende unverändert bleibt und/oder dass erhöhte Spaltbildungen vermieden sind bzw. dass die Spaltfugen gleichmäßig sind.

Bei einer bekannten Verschraubungsart ist die Verschraubung an der Befestigungsstelle auf Block ausgelegt, d.h. die beiden zu verbindenden Bauteile liegen aneinander und werden beim Schraubvorgang aneinander gepresst. Bei dieser Verschraubungsart ergibt sich nicht zwangsläufig eine gewünschte Bauteilanlage an den zu der Verschraubungsstelle beabstandeten Rändern der zu verbindenden Bauteile. Es muss ein erhöhtes Spiel vorgesehen sein, damit aufgrund der (Block-) Verschraubung keine Verspannung ins Bauteil gebracht wird.

Aus der FR 2719271 A1 ist eine Verbindung eines Innenverkleidungsteils eines Fahrzeuges bekannt.

Aufgabe der Erfindung ist es, ein Kraftfahrzeug zu schaffen, bei dem eine Zierleiste, die sich überlappende Ränder zweier benachbarter Bauteilen überbrückt und/oder überdeckt, ohne eine sichtbare Verformung befestigbar ist.

Diese Aufgabe wird durch die Merkmale des Anspruchs 1 gelöst.

Ein erfindungsgemäßes Kraftfahrzeug weist zwei Bauteile auf. Die beiden erfindungsgemäßen Bauteile sind ein Montageteil und ein Karosserie-Bauteil eines Verdeckkastendeckels eines als Cabriolet ausgebildeten Kraftfahrzeuges. Die beiden Bauteile überlappen sich an ihren Rändern. Die beiden Ränder sind durch eine Zierleiste oder Blende überdeckt. Die Überdeckung erfolgt dadurch, dass die Ränder der Zierleiste an den Rändern des jeweiligen Bauteils aufliegen. Über den Verlauf der beiden zu überdecken- den Bauteilen ist eine vorgegebene Anzahl an Befestigungsstellen für eine Schraubverbindung an der Blende ausgebildet.

Vorteilhafterweise weist die Zierleiste ein Trägerbauteil und ein daran befestigtes Zierbauteil auf. In dem Trägerbauteil sind die Befestigungsstellen ausgebildet. Beabstandet zu der jeweiligen Befestigungsstelle sind jeweils zwei gegenüberliegende Schlitze ausgebildet.

Die jeweiligen beiden gegenüberliegenden Schlitze an der jeweiligen Befestigungsstelle sind vorteilhafterweise so ausgelegt, dass eine elastische Verformung an der jeweiligen Befestigungsstelle bei der Verschraubung vorhanden ist, so dass durch die Elastizität an der jeweiligen Befestigungsstelle eine konstruktive Vorspannung in die jeweilige Befestigungsstelle eingebracht ist.

In einer vorteilhaften Ausführungsform liegt an der jeweiligen Befestigungsstelle an dem Trägerbauteil der Zierleiste ein Kopf einer Schraube auf. Ein mit Gewinde versehener Bolzenabschnittes der jeweiligen Schraube ist durch eine in dem Trägerbauteil ausgebildete Durchgangsöffnung und durch eine Durchgangsöffnung hindurchgeführt, die in dem zu dem Trägerbauteil gegenüberliegenden Rand des einen Bauteils ausgebildet sind. Über jeweils eine Mutter ist die jeweilige Schraube an einer Außenfläche eines Randes des einen Bauteils befestigt.

Über die Befestigung der jeweiligen Schraube an dem Bauteil ist das Trägerbauteil und damit die Zierleiste vorteilhafterweise an dem einen Bauteil befestigt.

Im befestigten Zustand des Trägerbauteils und damit der Zierleiste an dem einen Bauteil liegt in einer vorteilhaften Ausführungsform ein Seitenrand des Zierbauteils an dem einen Bauteil auf und ein dazu gegenüberliegender Seitenrand der Zierleiste liegt an dem Rand des anderen Bauteils auf.

Vorteilhafterweise ist über die Länge der Schlitze und/oder die Breite der Schlitze die Steifigkeit und damit die elastische Verformbarkeit des zwischen den Schlitzen liegenden Abschnittes des Trägerbauteils einstellbar.

Die jeweilige Befestigungsstelle ist in einer vorteilhaften Ausführungsform topfförmig mit umlaufenden Seitenwänden und einem mit den umlaufenden Seitenwänden einstückig verbundenen Boden ausgebildet.

Die Steifigkeit und damit die elastische Verformbarkeit der jeweiligen Befestigungsstelle ist vorteilhafterweise durch eine entsprechende Auslegung der Form und/oder der Dicke der umlaufenden Seitenwand und/oder der Form und/oder der Dicke des Bodens der jeweiligen Befestigungsstelle einstellbar.

In einer vorteilhaften Ausführungsform ist zwischen den beiden Rändern eine Vertiefung ausgebildet, wobei die Vertiefung durch die Zierleiste oder Blende überdeckt ist.

Eine Ausführungsform der Erfindung wird nachstehend anhand der Zeichnungen beispielshalber beschrieben. Dabei zeigen:
- Figur 1: eine perspektivische Ansicht eines Heckbereichs eines Kraftfahrzeuges mit einer Verdeckanordnung, wobei sich die Verdeckanordnung im geschlossenen Zustand befindet,
- Figur 2: eine schematische, perspektivische Ansicht einer Verdeckkastenklappe,
- Figur 3: eine Schnittansicht längs der Linie I-I in der Figur 1 jedoch bei einem geöffneten Verdeck, und
- Figur 4: eine perspektivische Ansicht einer teilweise dargestellten Unterseite eines Trägerbauteils einer zu befestigenden Blende, die eine Befestigungsstelle einer Schraubverbindung an einer Außenfläche zeigt.

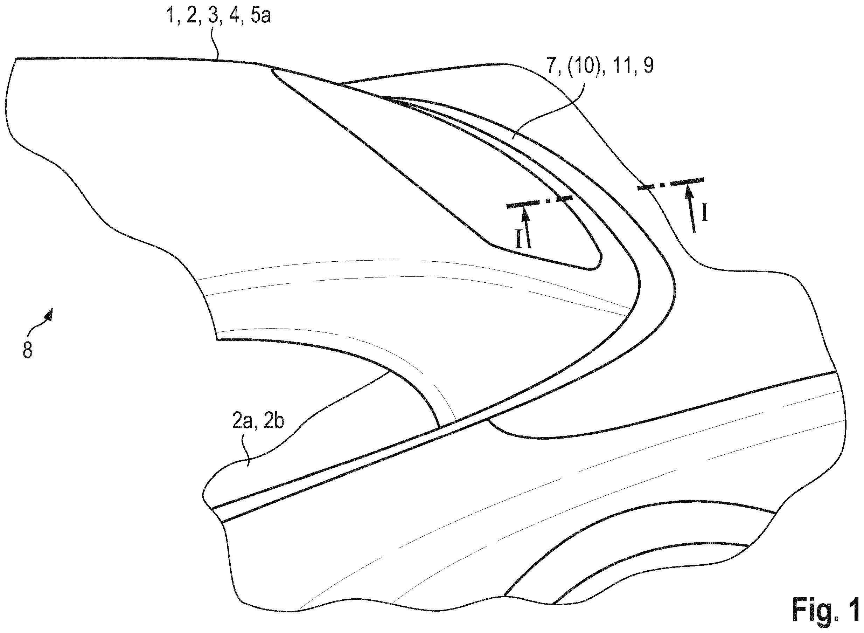

Die Figur 1 zeigt einen Heckbereich 2 eines Kraftfahrzeuges 1 bei dem ein Dach 3 durch ein Verdeck 4 gebildet ist. Das Verdeck 4 befindet sich in der Figur 1 in einem geschlossenen Zustand 5a. Im geschlossenen Zustand 5a des Verdeckes 4 ist in der Figur 1 ein vorderes Ende 2a einer sich in einem Fahrzeuginnenraum 8 befindlichen Seitenverkleidung 2b sichtbar.

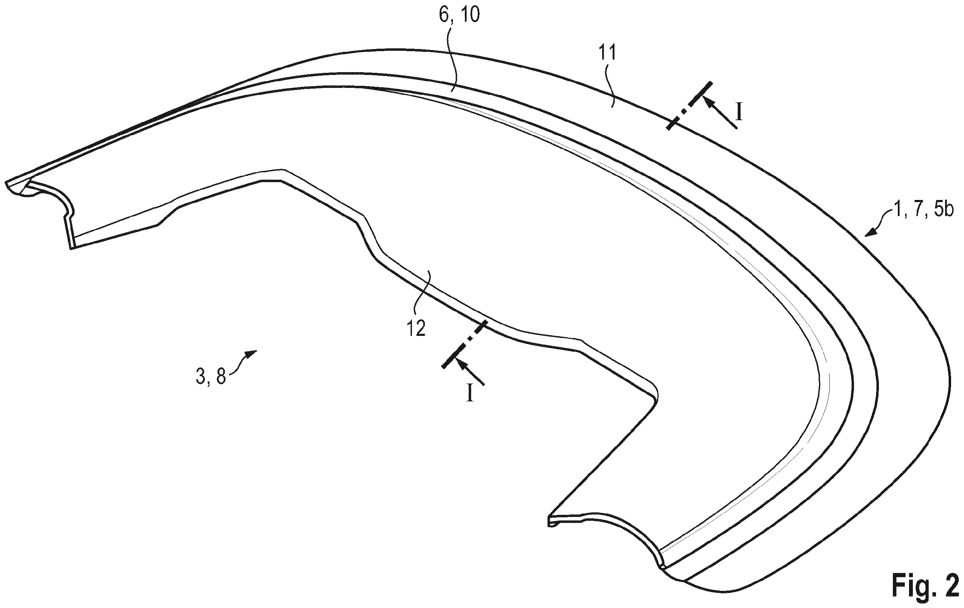

An ein unteres Ende 9 des Verdecks 4 schließt sich in den Figuren 1 und 2 sichtbar ein U-förmig ausgebildetes Karosserie-Bauteil 11 eines Verdeckkastendeckels 7 an. Eine in der Figur 2 gezeigte Blende oder Zierleiste 10 wird durch das untere Ende 9 des Verdecks 4 verdeckt.

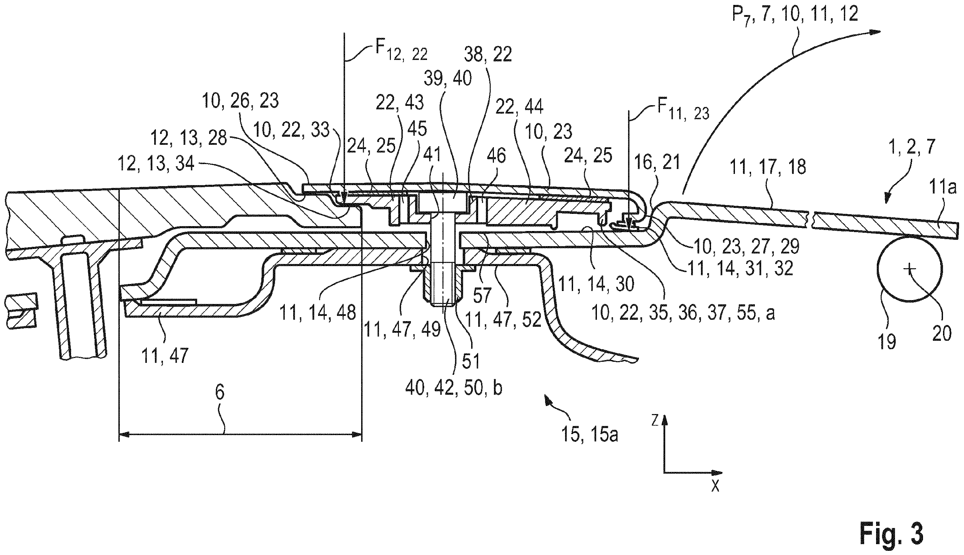

Die Figur 2 zeigt einen Verdeckkastendeckel 7 bei einem geöffneten Zustand 5b eines sich in einem Verdeckkasten 15 (Figur 3) befindlichen Verdecks 4. Ein Hohlraum 15a des Verdeckkastens 15 ist unterhalb des Verdeckkastendeckels 7 ausgebildet.

Der Verdeckkastendeckel 7 besteht im Wesentlichen aus dem U-förmig ausgebildeten Karosserie-Bauteil 11 und einem daran montierten Montageteil 12. Das Karosserie-Bauteil 11 und das Montageteil 12 überdecken sich in einem Überlappungsbereich 6. In dem Überlappungsbereich 6 zwischen dem Karosserie-Bauteil 11 und dem Montageteil 12 ist die in der Figur 2 gezeigte Zierleiste 10 angebracht.

Die Figur 3 zeigt eine Schnittdarstellung gemäß den Schnittansichten I-I in den Figuren 1 und 2. Das Montageteil 12 ist nur teilweise dargestellt. Ein der Zierleiste 10 zugewandter Rand 13 des Montageteils 12 liegt im Überlappungsbereich 6 auf einem dem Montageteil 12 zugewandten oberen, abgesenkten Randabschnitt 14 des Karosserie-Bauteils 11 auf. Das Montageteil 12 ist an dem Karosserie-Bauteil 11 in bekannter Weise befestigt.

In der gezeigten Ausführungsform schließt sich an den oberen, abgesenkten Randabschnitt 14 des Karosserie-Bauteils 11 ein um eine umlaufende Stufe 16 erhöhter (Außen-) Abschnitt 18 des Karosserie-Bauteils 11 an. Der erhöhte (Außen-) Abschnitt 18 des Karosserie-Bauteils 11 weist eine Karosserieaußenfläche 17 auf.

In einer nicht gezeigten, anderen Ausführungsform geht der obere Randabschnitt 14 des Karosserie-Bauteils 11 in einen (Außen-) Abschnitt 18 des Karosserie-Bauteils 11 über. Der (Außen-) Abschnitt 18 des Karosserie-Bauteils 11 weist eine Karosserieaußenfläche 17 auf.

In der gezeigten Ausführungsform ist unterhalb des Abschnittes 18 des Karosserie-Bauteils 11 an einem rechten Ende 11a des Karosserie-Bauteils 11 ein Kreis 19 dargestellt, der symbolisch für am Karosserie-Bauteil 11 angeordnete Scharniere und eine damit sich ergebende Drehachse 20 steht. Ein Pfeil P₇ zeigt eine Schwenkrichtung des Verdeckkastendeckels 7 um die Drehachse 20 an.

In einer nicht gezeigten, anderen Ausführungsform erfolgt die Bewegung des Verdeckkastendeckels 7 in einer anderen bekannten Form.

Eine zwischen dem Rand 13 des Montageteils 12 und der umlaufenden Stufe 16 des Karosserie-Bauteils 11 in Fahrzeuglängsrichtung x verlaufende Vertiefung 21 ist durch die Zierleiste 10 abgedeckt.

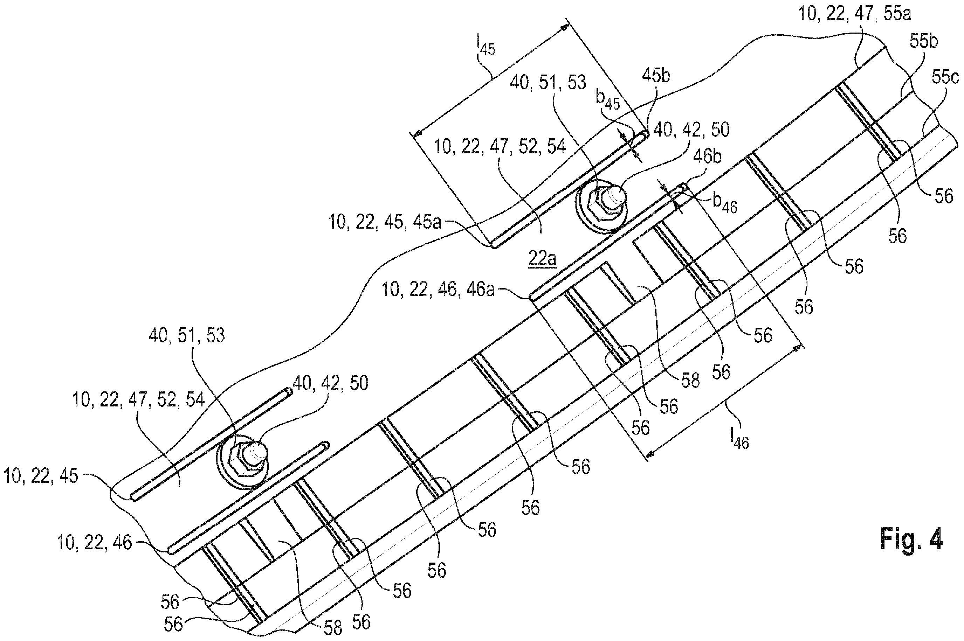

Die Zierleiste 10 weist ein in der Figur 4 gezeigtes Trägerbauteil 22 und ein daran befestigtes Zierbauteil 23 auf. Das Zierbauteil 23 hat unter anderem eine optische Funktion hat. Die Befestigung des Zierbauteils 23 an dem Trägerbauteil 22 der Zierleiste 10 kann formschlüssig beispielsweise über eine Clipsverbindung 24 und/oder stoffschlüssig über eine Klebeverbindung 25 erfolgen.

Das Zierbauteil 23 der Zierleiste 10 weist zwei gegenüberliegende, umlaufende Seitenränder 26, 27 auf. In der gezeigten Ausführungsform liegt der Seitenrand 26 an einem abgestuften Abschnitt 28 des Randes 13 der Montageteils 12 auf. Der dazu gegenüberliegende Seitenrand 27 weist in der gezeigten Ausführungsform einen in etwa U-förmigen Querschnitt auf.

Ein freies Ende 29 des Seitenrandes 27 liegt an einer nach außen zeigenden Außenfläche 30 des Randes 14 des Karosserie-Bauteils 11 auf. Zur definierten Auflage des freien Endes 29 des Zierbauteils 23 der Zierleiste 11 ist an der Außenfläche 30 des lackierten Randes 14 des Karosserie-Bauteils 11 eine umlaufende Dicht-Leiste 31, beispielsweise ein Gummi-Keder, angeordnet oder es sind punktförmige Erhebungen 32, beispielsweise aus Gummi, an der Außenfläche 30 des Randes 14 des Karosserie-Bauteils ausgebildet.

Das Trägerbauteil 22 liegt mit seinem dem Montageteil 12 zugewandten Seitenrand 33 an einem weiteren abgestuften Abschnitt 34 des Randes 13 des Montageteils 12 auf. Ein dazu gegenüberliegender Seitenrand 35 des Trägerbauteils 22 ist in der gezeigten Ausführungsform mit einem in senkrechter Richtung z nach unten sich erstreckenden umlaufenden Vorsprung oder einem vorstehenden Abschnitt 36 oder einem Längssteg 55 entsprechend der Figur 4 versehen.

Ein freies Ende 37 des vorstehenden Abschnittes 36 des Seitenrandes 35 des Trägerbauteils ist von der Außenfläche 30 des Randes 14 des Karosserie-Bauteils 11 um einen definierten Abstand a beabstandet.

In dem Trägerbauteil 22 der Zierleiste 10 ist in etwa mittig ein vertiefter Auflageabschnitt 38 für einen Kopf 39 einer Schraube 40 ausgebildet. Ferner ist in dem Auflageabschnitt 38 eine Durchgangsöffnung 41 zum Hindurchführen des mit einem Gewinde versehenen Bolzenabschnittes 42 ausgebildet. Der vertiefte Auflageabschnitt 38 ist von dazu benachbarten Abschnitten 43, 44 des Trägerbauteils 22 um jeweils einen Spalt oder Schlitz 45, 46 beabstandet.

Zur Hindurchführung des mit einem Gewinde versehenen Bolzenabschnittes 42 der Schraube 40 ist in dem oberen Randabschnitt 14 des Karosserie-Bauteils 11 und einem daran befestigten, unteren Randabschnitt 47 jeweils eine Durchgangsöffnung 48, 49 ausgebildet.

In der gezeigten Ausführungsform ragt der mit einem Gewinde versehene Bolzenabschnitt 42 der gezeigten Schraube 40 über die Durchgangsöffnung 49 des unteren Randabschnittes 47 des Karosserie-Bauteils 11 um einen vorbestimmten Abstand b über.

Ein freies Ende 50 des mit einem Gewinde versehenen Bolzenabschnittes 42 der Schraube 40 ist über eine Mutter 51 an einer nach unten zeigenden Außenfläche 52 des unteren Randabschnittes 47 des Karosserie-Bauteils 11 befestigt.

In einer Ausführungsform erfolgt die Anordnung der jeweiligen Schraube 40 in der jeweiligen Durchgangsöffnung 41 des vertieften Auflageabschnittes 38 vor der Befestigung des Zierbauteils 23 an dem Trägerbauteil 22.

Die fertig montierte Zierleiste 10 wird mit dem jeweiligen überstehenden freien Ende 50 des mit einem Gewinde versehenen Bolzenabschnittes 42 der jeweiligen Schraube 40 in den jeweiligen Durchgangsöffnungen 48, 49 des oberen Randabschnittes 14 bzw. des unteren Randabschnittes 47 angeordnet. Nachfolgend wird die jeweilige Schraube 40 über jeweils eine Mutter 51 an der Außenfläche 52 des unteren Randabschnittes 47 verschraubt.

Wie aus der Figur 3 hervorgeht, liegt der zum Montageteil 12 zeigende Seitenrand 33 des Trägerbauteils 22 an dem unteren abgestuften Abschnitt 34 des Randes 13 des Montageteils 12 auf, wie dies durch einen senkrechten Pfeil F_{12,22} gezeigt ist.

Ein senkrechter Pfeil F_{11, 23} zeigt die Krafteinwirkung vom Trägerbauteil 22 über die Clipsverbindung 24 und/oder über die Klebeverbindung 25 auf den Seitenrand 27 des Zierbauteils 23 der Zierleiste 10. Der Seitenrand 27 des Zierbauteils 23 der Zierleiste 10 drückt über die Auflagefläche 31, 32 auf den oberen Abschnitt 14 des Karosseriebauteils 11. Dadurch liegt der Seitenrand 27 des Zierbauteils 23 auf dem oberen Abschnitt 14 des Karosseriebauteils 11 auf.

Durch die in der Figur 3 gezeigte Befestigung ergibt sich eine erste federnde Verbindung zwischen dem Trägerbauteil 22, das auf den Rand 13 des Montageteils 12 über die durch die Verschraubung wirkende Krafteinwirkung F_{12, 22} drückt, und dem Seitenrand 27 des Zierbauteils 23, der auf die Außenfläche 30 des oberen Randabschnittes 14 des Karosserie-Bauteils 11 über die durch die Verschraubung wirkende Krafteinwirkung F_{11, 23} drückt.

Eine zweite federnde Verbindung ergibt sich dadurch, dass der Auflageabschnitt 38 über die Längsspalten oder Längsschlitze 45, 46 im Trägerbauteil 22 das Trägerbauteil 22 federnd oder durch elastische Verformung nachgiebiger ist.

Die jeweiligen beiden gegenüberliegenden Schlitze 45, 46 an der jeweiligen Befestigungsstelle 38, 41, 53 sind so ausgelegt, dass eine elastische Verformung an der jeweiligen Befestigungsstelle 38, 41, 53 bei der Verschraubung vorhanden ist. Durch die Elastizität an der jeweiligen Befestigungsstelle 38, 41, 53 ist eine konstruktive Vorspannung in die jeweilige Befestigungsstelle 38, 41, 53 eingebracht.

Über die Länge der Schlitze 45, 46 und/oder die Breite der Schlitze 45, 46 ist die Steifigkeit und damit die elastische Verformbarkeit des zwischen den Schlitzen 45, 46 liegenden Abschnittes 22a des Trägerbauteils 22 einstellbar.

Bei einer bekannten Schraubenverbindung entsteht in den Toleranzlagen der Bauteile 10, 11, 12 entweder ein Spalt oder es entsteht eine hohe Verspannung.

Durch eine punktuelle Belastung kann bei einer direkten Schraubverbindung eine Kraft auf die Sichtfläche oder Außenfläche 23a des Zierbauteils 23 wirken. Bei einer direkten Schraubverbindung besteht die Gefahr der Bildung von Dellen oder es entstehen Abzeichnungen an der Außenfläche 23a des Zierbauteils 23.

Ferner ist eine gleichmäßige Anlagekraft über den ganzen Auflagebereich, d.h. an der Dichtung 31 und an den Auflagestellen zwischen dem Zierbauteil 23 und den Bauteilen 11,12 erforderlich.

Bei einer bekannten Schraubenverbindung ohne Toleranzausgleich werden die Bauteile punktuell stark belastet. Dies führt in Zusammenwirkung mit einer Dichtung zur Durchbiegung/Wellenbildung an der Zierleiste 10 bzw. dem Zierbauteil 23. In der Folge bewirkt die punktuelle Belastung eine ungleichmäßige Anlagekraft an der Dichtung 31. Die Dichtung 31 kann nicht sicher Abdichten. Zur Behebung dieser Probleme muss die Anlagekraft und die Kraftverteilung ggf. an die Anbausituation konstruktiv angepasst werden.

Bei einer bekannten Schraubenverbindung wird meist an den Anschraubpunkten auf Block verschraubt. Die Anlagekraft an den Randbereichen (Auflagestellen) kann mit dem Anzugsmoment nicht beeinflusst werden.

Durch die beiden Längsschlitze bzw. die beiden gegenüberliegenden Schlitze 45, 46 seitlich neben der jeweiligen Schraubverbindung 39, 40, 51 wird in diesem Bereich des Abschnittes 22a eine elastische Verformung zugelassen. Aufgrund der Elastizität des Abschnittes 22a kann eine konstruktive Vorspannung zwischen dem Trägerbauteil 22 und dem Bauteil 11 eingebracht werden. Dadurch werden die Toleranzen ausgeglichen. Diese Vorspannung wirkt auf die Auflagestellen des Zierbauteils 23 an den gegenüberliegenden Rändern 26, 27 des Zierbauteils 23 zum einen auf das Bauteil 11 und zum anderen auf das Bauteil 12.

Durch die Längsschlitze 45, 46 wird die beim Verschrauben entstehende Kraft nicht direkt an der Schraubstelle 40, 51 in das Trägerbauteil 22 eingeleitet, sondern die beim Verschrauben entstehende Kraft wird seitlich an den beiden gegenüberliegenden Enden des Abschnittes 22a in Höhe der Enden 45a, 45b und 46a und 46b der Längsschlitze 45, 46 eingeleitet. Durch die Kraftverteilung wird die Kraft auf den Auflagestellen (Randbereiche) des Zierbauteils 23 an den gegenüberliegenden Rändern 26, 27 des Zierbauteils 23 zum einen auf das Bauteil 11 und zum anderen auf das Bauteil 12 gleichmäßig verteilt. Dadurch wird auch eine gleichmäßige Anlagekraft an der Dichtung 31 erzielt.

Durch die Gestaltung der Längsschlitze 45, 46, d.h. die Breite b _{45,46} und die Länge I_{45,46} der Längsschlitze 45, 46 kann die Kraftverteilung an den Auflagestellen (Randbereichen) des Zierbauteils 23 an den gegenüberliegenden Rändern 26, 27 des Zierbauteils 23 zum einen auf das Bauteil 11 und zum anderen auf das Bauteil 12 beeinflusst und gesteuert werden. Die obengenannte Vorspannung, die Kraftverteilung, und die maximale Kraft kann durch konstruktive Anpassung die Breite b_{45,46} und die Länge I_{45,46} der Längsschlitze 45, 46 verändert werden.

Bei dem Verdrehen der jeweiligen Mutter 51 wird die dazugehörige Schraube 40 und damit das Trägerbauteil 22 durch die elastische Verformung des Abschnittes 22a an der Befestigungsstelle 38 um einen Freiraum oder Abstand 57 nach unten gezogen, bis das Trägerbauteil 22 in Anlage an dem Karosserie-Bauteil 11 kommt.

Nach der Anlage des Trägerbauteils 22 an dem Karosserie-Bauteil 11 und einem weiteren Drehen der jeweiligen Mutter 51 steigen das zum Drehen der Mutter 51 erforderliche Drehmoment und die Auflagekraft an den gegenüberliegenden Rändern 26, 27 des Zierbauteils 23 zum einen auf das Bauteil 11 und zum anderen auf das Bauteil 12 an. Unterhalb des Randes 26 des Zierbauteils 23 liegt der Rand 33 des Trägerbauteils 22 an dem Rand 13 des Montageteils oder Bauteils 12 an. Dadurch kann die auf den Rand 26 des Zierbauteils 23 wirkende Kraft nicht so stark ansteigen wie auf den Rand 27 des Zierbauteils 23 auf das Karosserie-Bauteil 11.

Durch das Anziehen der jeweiligen Mutter 51 wird über die Lastverteilung an den Enden des Abschnittes 22a ein eventuell vorhandenes Spiel zwischen den Seitenrändern 26, 27 des Zierbauteils 23 und den dazu gegenüberliegenden Anlageflächen an dem Karosserie-Bauteil 11 und dem Montageteil 12 durch eine Anlage an das Karosserie-Bauteil 11 bzw. das Montageteil 12 verringert oder beseitigt.

Das Anzugsmoment der Mutter 51 hat somit keine Einwirkung auf das Zierbauteil 23 der Zierleiste 10, so dass es zu keinen Verspannungen oder zu einem Verzug des Zierbauteils 23 der Zierleiste 10 kommt. Das Zierbauteil 23 der Zierleiste 10 liegt gleichmäßig an den Fugen bildenden Anlagestellen 12, 13, 28 bzw. 11, 31, 32, 14 an.

In der Figur 4 ist eine Befestigungsstelle 53 einer Mutter 51 an einer Schraube 40 an der Außenfläche 52 einer Unterseite 54 des unteren Randabschnittes 47 des Trägerbauteils 22 gezeigt. Ferner gehen aus der Figur 4 die beiden Längsspalten 45, 46 am Trägerbauteil 22 der Zierleiste 10 hervor. An den Längsspalt 46 schließt sich eine Verstärkungsrampe 58 an, die zwischen zwei voneinander beabstandeten Querrippen 56 angeordnet ist.

Wie aus der Figur 4 weiter hervorgeht, weist die Unterseite 54 des Trägerbauteils 22 Längsstege 55a, 55b und 55c auf. Die Längsstege 55a, 55b, 55c sind zur Versteifung des Trägerbauteils 22 durch voneinander beabstandete Querrippen 56 miteinander verbunden.

## Patentansprüche

1. Kraftfahrzeug (1) mit zwei Bauteilen (11, 12), wobei die beiden Bauteile (11, 12) das Karosserie-Bauteil (11) und das Montageteil (12) eines Verdeckkastendeckels (7) eines als Cabriolet ausgebildeten Kraftfahrzeuges (1) sind, die sich an Rändern (13, 14) überlappen, wobei die Ränder (13, 14) durch eine Zierleiste oder Blende (10) überdeckt sind, indem die Ränder der Zierleiste (10) an den Rändern (13, 14) des jeweiligen Bauteils (11, 12) aufliegen, wobei über den Verlauf der beiden zu überdeckenden Bauteilen (11, 12) eine vorgegebene Anzahl an Befestigungsstellen (38, 41, 53) für eine Schraubverbindung (39, 40, 51) an der Blende (10) ausgebildet ist, wobei die Zierleiste (10) ein Trägerbauteil (22) und ein daran befestigtes Zierbauteil (23) aufweist, dass in dem Trägerbauteil (22) die Befestigungsstellen (38, 41, 53) für die Schraubverbindung (39, 40, 51) ausgebildet sind, und dass beabstandet zu der jeweiligen Befestigungsstelle (38, 41, 53) jeweils zwei gegenüberliegende Schlitze (45, 46) ausgebildet sind.

2. Kraftfahrzeug nach Anspruch 1, **dadurch gekennzeichnet, dass** die jeweiligen beiden gegenüberliegenden Schlitze (45, 46) an der jeweiligen Befestigungsstelle (38, 41, 53) so ausgelegt sind, dass eine elastische Verformung an der jeweiligen Befestigungsstelle (38, 41, 53) bei der Verschraubung vorhanden ist, so dass durch die Elastizität an der jeweiligen Befestigungsstelle (38, 41, 53) eine konstruktive Vorspannung in die jeweilige Befestigungsstelle (38, 41, 53) eingebracht ist.

3. Kraftfahrzeug nach den Ansprüchen 1 oder 2, **dadurch gekennzeichnet, dass** an der jeweiligen Befestigungsstelle (38, 41, 53) an dem Trägerbauteil (22) der Zierleiste (10) ein Kopf (39) einer Schraube (40) aufliegt und dass ein mit Gewinde versehener Bolzenabschnittes (42) der jeweiligen Schraube (40) durch eine in dem Trägerbauteil (22) ausgebildete Durchgangsöffnung (41) und durch eine Durchgangsöffnung (48, 49) hindurchgeführt ist, die in dem zu dem Trägerbauteil (22) gegenüberliegenden Rand (14, 47) des einen Bauteils (12) ausgebildet ist und dass über jeweils eine Mutter (51) die jeweilige Schraube (40) an einer Außenfläche (52) eines Randes (47) des einen Bauteils (12) befestigt ist.

4. Kraftfahrzeug nach einem der vorhergehenden Ansprüche, **dadurch gekennzeichnet, dass** über die Befestigung der jeweiligen Schraube (40) an dem Bauteil (12) das Trägerbauteil (22) und damit die Zierleiste (10) an dem einen Bauteil (12) befestigt ist.

5. Kraftfahrzeug nach einem der vorhergehenden Ansprüche, **dadurch gekennzeichnet, dass** im befestigten Zustand des Trägerbauteils (22) und damit der Zierleiste (10) an dem einen Bauteil (12) ein Seitenrand (27) des Zierbauteils (23) an dem einen Bauteil (11) aufliegt und dass ein dazu gegenüberliegender Seitenrand (33) der Zierleiste (10) an dem Rand (13) des anderen Bauteils (12) aufliegt.

6. Kraftfahrzeug nach einem der vorhergehenden Ansprüche, **dadurch gekennzeichnet, dass** über die Länge der Schlitze (45, 46) und/oder die Breite der Schlitze (45, 46) die Steifigkeit und damit die elastische Verformbarkeit des zwischen den Schlitzen (45, 46) liegenden Abschnittes (22a) des Trägerbauteils (22) einstellbar ist.

7. Kraftfahrzeug nach einem der vorhergehenden Ansprüche, **dadurch gekennzeichnet, dass** die jeweilige Befestigungsstelle (38, 41, 53) topfförmig mit umlaufenden Seitenwänden und einem mit den umlaufenden Seitenwänden einstückig verbundenen Boden ausgebildet ist.

8. Kraftfahrzeug nach Anspruch 7, **dadurch gekennzeichnet, dass** die Steifigkeit und damit die elastische Verformbarkeit der jeweiligen Befestigungsstelle (38, 41, 53) durch eine entsprechende Auslegung der Form und/oder der Dicke der umlaufenden Seitenwand und/oder der Form und/oder der Dicke des Bodens der jeweiligen Befestigungsstelle (38, 41, 53) einstellbar ist.

9. Kraftfahrzeug nach einem der vorhergehenden Ansprüche, **dadurch gekennzeichnet, dass** zwischen den beiden Rändern (13, 14) der beiden Bauteile (11, 12) eine Vertiefung (21) ausgebildet ist, und dass die Vertiefung (21) durch die Zierleiste oder Blende (10) überdeckt ist.

## Claims

1. Motor vehicle (1) having two components (11, 12), wherein the two components (11, 12) are the body component (11) and the assembly part (12) of a soft-top compartment lid (7) of a motor vehicle (1) configured as a convertible that overlap on the peripheries (13, 14), wherein the peripheries (13, 14) are covered by a trim strip or bezel (10) in that the peripheries of the trim strip (10) bear on the peripheries (13, 14) of the respective component (11, 12), wherein a predefined number of fastening points (38, 41, 53) for a screw connection (39, 40, 51) on the bezel (10) are configured across the profile of the two components (11, 12) to be covered, wherein the trim strip (10) has a support component (22) and a trim component (23) fastened thereto, wherein the fastening points (38, 41, 53) for the screw connection (39, 40, 51) are configured in the support component (22), and wherein two mutually opposite slots (45, 46) are in each case configured so as to be spaced apart from the respective fastening points (38, 41, 53).

2. Motor vehicle according to Claim 1, **characterized in that** the respective two mutually opposite slots (45, 46) at the respective fastening point (38, 41, 53) are conceived such that an elastic deformation is present at the respective fastening point (38, 41, 53) during the screw-fitting such that a pre-load in terms of the construction is introduced into the respective fastening point (38, 41, 53) on account of the elasticity at the respective fastening point (38, 41, 53).

3. Motor vehicle according to Claims 1 or 2, **characterized in that** a head (39) of a screw (40) bears on the respective fastening point (38, 41, 53) on the support component (22) of the trim strip (10), and **in that** a bolt portion (42) of the respective screw (40) that is provided with a thread is guided through a through opening (41) configured in the support component (22) and through a through opening (48, 49) which is configured in the periphery (14, 47) of the one component (12) that lies opposite the support component (22), and **in that** the respective screw (40) is in each case fastened to an external face (52) of a periphery (47) of the one component (12) by way of a nut (51).

4. Motor vehicle according to one of the preceding claims, **characterized in that** the support component (22) and thus the trim strip (10) are fastened to the one component (12) by way of the fastening of the respective screw (40) to the component (12).

5. Motor vehicle according to one of the preceding claims, **characterized in that**, in the fastened state of the support component (22) and thus of the trim strip (10) on the one component (12), a lateral periphery (27) of the trim component (23) bears on the one component (11), and **in that** a lateral periphery (33) of the trim strip (10) that is opposite thereto bears on the periphery (13) of the other component (12).

6. Motor vehicle according to one of the preceding claims, **characterized in that** the stiffness and thus the elastic deformation capability of the portion (22a) of the support component (22) that lies between the slots (45, 46) is adjustable across the length of the slots (45, 46) and/or the width of the slots (45, 46).

7. Motor vehicle according to one of the preceding claims, **characterized in that** the respective fastening point (38, 41, 53) is configured so as to be pot-shaped having encircling lateral walls and a base that is integrally connected to the encircling lateral walls.

8. Motor vehicle according to Claim 7, **characterized in that** the stiffness and thus the elastic deformation capability of the respective fastening point (38, 41, 53) is adjustable by way of a corresponding design of the shape and/or the thickness of the encircling lateral wall, and/or the shape and/or the thickness of the base of the respective fastening point (38, 41, 53).

9. Motor vehicle according to one of the preceding claims, **characterized in that** a depression (21) is configured between the two peripheries (13, 14) of the two components (11, 12), and **in that** the depression (21) is covered by the trim strip or bezel (10).

## Revendications

1. Véhicule automobile (1), comprenant deux composants (11, 12), les deux composants (11, 12) étant le composant de carrosserie (11) et la partie de montage (12) d'un couvercle de compartiment de capote (7) d'un véhicule automobile (1) réalisé sous forme de cabriolet qui se recouvrent au niveau des bords (13, 14), les bords (13, 14) étant recouverts par une moulure décorative ou un cache (10) en ce que les bords de la moulure décorative (10) reposent sur les bords (13, 14) du composant (11, 12) respectif, dans lequel, sur le tracé des deux composants (11, 12) à recouvrir, un nombre prédéfini de points de fixation (38, 41, 53) est réalisé pour un assemblage vissé (39, 40, 51) avec le cache (10), la moulure décorative (10) présentant un composant de support (22) et un composant décoratif (23) fixé à celui-ci, les points de fixation (38, 41, 53) pour l'assemblage vissé (39, 40, 51) étant réalisés dans le composant de support (22), et respectivement deux fentes opposées (45, 46) étant réalisées à distance du point de fixation (38, 41, 53) respectif.

2. Véhicule automobile selon la revendication 1, **caractérisé en ce que** les deux fentes opposées (45, 46) respectives au point de fixation (38, 41, 53) respectif sont conçues de telle sorte qu'une déformation élastique existe au point de fixation (38, 41, 53) respectif au moment du vissage de sorte que l'élasticité au point de fixation (38, 41, 53) respectif introduit une précontrainte de construction dans le point de fixation (38, 41, 53) respectif.

3. Véhicule automobile selon l'une quelconque des revendications 1 ou 2, **caractérisé en ce qu'**au point de fixation (38, 41, 53) respectif, une tête (39) d'une vis (40) repose sur le composant de support (22) de la moulure décorative (10), et **en ce qu'**une section de boulon filetée (42) de la vis (40) respective passe à travers une ouverture de passage (41) réalisée dans le composant de support (22) et par une ouverture de passage (48, 49) qui est réalisée dans le bord (14, 47), opposé au composant de support (22), dudit un composant (12), et **en ce que** respectivement un écrou (51) fixe la vis (40) respective sur une surface extérieure (52) d'un bord (47) dudit un composant (12).

4. Véhicule automobile selon l'une quelconque des revendications précédentes, **caractérisé en ce que** la fixation de la vis (40) respective au composant (12) permet de fixer le composant de support (22), et donc la moulure décorative (10), audit un composant (12).

5. Véhicule automobile selon l'une quelconque des revendications précédentes, **caractérisé en ce qu'**à l'état fixé du composant de support (22), et donc de la moulure décorative (10), audit un composant (12), un bord latéral (27) du composant décoratif (23) repose sur ledit un composant (11), et **en ce qu'**un bord latéral (33), opposé à celui-ci, de la moulure décorative (10) repose sur le bord (13) de l'autre composant (12).

6. Véhicule automobile selon l'une quelconque des revendications précédentes, **caractérisé en ce que** la longueur des fentes (45, 46) et/ou la largeur des fentes (45, 46) permettent de régler la rigidité, et donc la capacité de déformation élastique, de la section (22a) du composant de support (22) située entre les fentes (45, 46).

7. Véhicule automobile selon l'une quelconque des revendications précédentes, **caractérisé en ce que** le point de fixation (38, 41, 53) respectif est réalisé en forme de pot ayant des parois latérales périphériques et un fond relié d'un seul tenant aux parois latérales périphériques.

8. Véhicule automobile selon la revendication 7, **caractérisé en ce que** la rigidité, et donc la capacité de déformation élastique, du point de fixation (38, 41, 53) respectif est réglable par une conception adéquate de la forme et/ou de l'épaisseur de la paroi latérale périphérique et/ou de la forme et/ou de l'épaisseur du fond du point de fixation (38, 41, 53) respectif.

9. Véhicule automobile selon l'une quelconque des revendications précédentes, **caractérisé en ce qu'**un creux (21) est réalisé entre les deux bords (13, 14) des deux composants (11, 12), et **en ce que** le creux (21) est recouvert par la moulure décorative ou le cache (10).
